# EUROPEAN PATENT SPECIFICATION

(11) **EP 1 435 612 B1**
(45) Date of publication and mention of the grant of the patent: **17.02.2010**
(21) Application number: 02772920.1
(22) Date of filing: 26.09.2002
(51) Int. Cl.: G11B 15/467, G11B 15/52

(54) **MAGNETIC RECORDING/REPRODUCING APPARATUS**
MAGNETISCHE AUFZEICHNUNGS-BZW. WIEDERGABEVORRICHTUNG
DISPOSITIF D'ENREGISTREMENT/REPRODUCTION MAGNETIQUE

(30) Priority: 27.09.2001 JP 2001296837
(43) Date of publication of application: 07.07.2004
(73) Proprietor: Panasonic Corporation, Kadoma-shi Osaka 571-8501 (JP)
(72) Inventor: NAITO, Yasuki, Takarazuka-shi, Hyogo 665-0871 (JP); SAKAKIBARA, Yoshio, Osaka 567-0045 (JP); HONJO, Kenichi, Shijonawate-shi, Osaka 575-0003 (JP)
(74) Representative: Balsters, Robert
(86) International application number: PCT/JP2002/009923
(87) International publication number: WO 2003/030162

(56) References cited:
- EP-A- 0 776 006
- JP-A- 1 138 649
- JP-A- 2 058 754
- JP-A- 5 298 786

## Description

### TECHNICAL FIELD

The present invention relates to magnetic recording and playback apparatuses for recording and playing back information and signals using a tape format in which information is recorded on a helical track on a tape and a control signal (CTL signal) is recorded on a linear track on the tape.

### BACKGROUND ART

There is a tape format that lays multiple helical tracks on a tape. Information such as video and audio data and a tracking pilot signal for detecting the tracking state at the time of playback are recorded on these tracks. Using this format, there is a system that realizes phase lock-in action during tape travel. This system is called an automatic track finding (ATF) system.

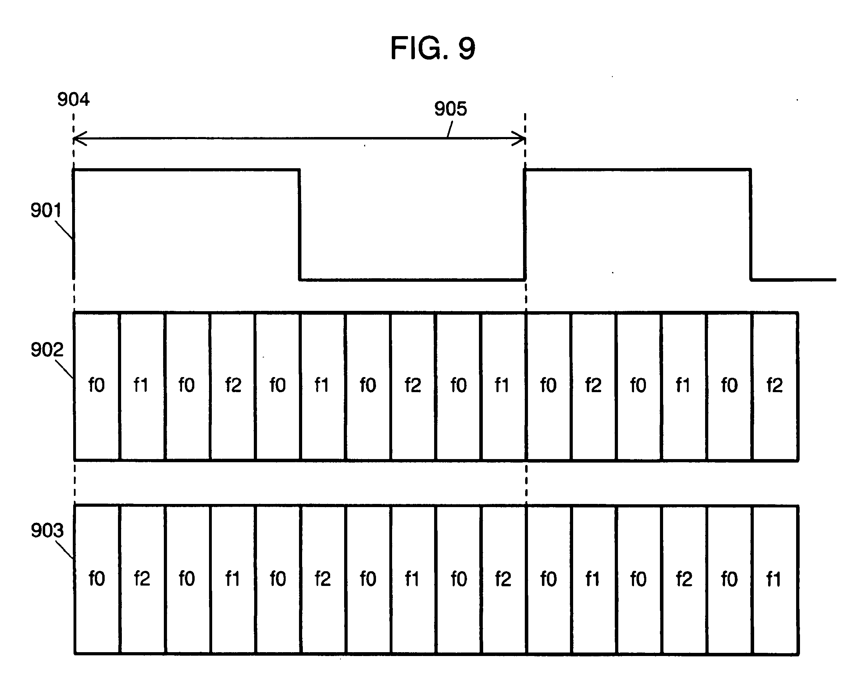

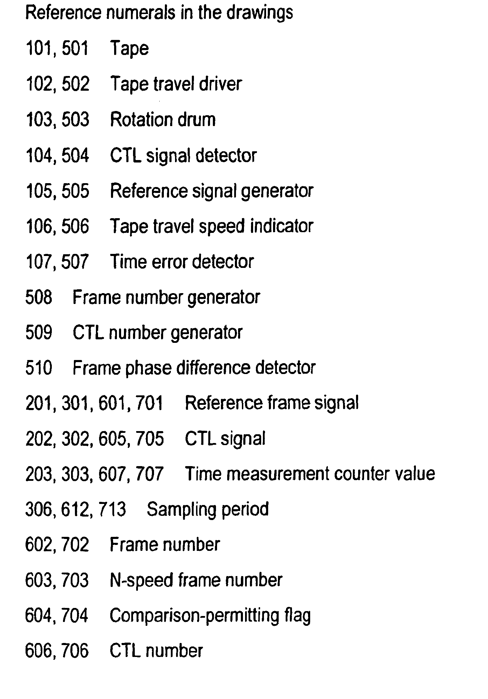

Fig. 9 shows the relationship between a reference frame signal and a pattern of tracking pilot frequency record after phase lock-in action in the above ATF system. Reference frame signal 901 rises sharply at timing 904, which is the reference for the frame. Frequency recording patterns 902 and 903 of the tracking pilot signal indicate a change in the tracking pilot frequency recorded on every track. In frequency recording patterns 902 and 903, f0, f1, and f2 show the frequencies of the tracking pilot signal recorded on the helical tracks on the tape. No tracking pilot signal is recorded on the track shown by f0. The tracking pilot signal with frequency f1 is recorded on the track indicated by f1. The tracking pilot signal with frequency f2 is recorded on the track indicated by f2.

In Fig. 9, one sequence of the tracking pilot signal frequencies consists of four tracks, and one frame consists of ten tracks. The number of tracks comprising one frame cannot be completely divided by the number of tracks in one sequence of the tracking pilot signal frequencies. Accordingly, two types of patterns, i.e., frequency recording patterns 902 and pattern 903, are present in the tracking pilot signal when reference frame signal 901 acts as a reference signal.

The tracking pilot signals from two adjacent tracks are mixed in the playback signal obtained through a head when the head scans the track with the tracking pilot signal frequency f0. More specifically, the tracking pilot signal of the track with frequency f1 and the tracking pilot signal of the track with frequency f2 are mixed as crosstalk. The mix ratio of the tracking pilot signal with frequency f1 and the tracking pilot signal with frequency f2 varies depending on the relative positions of the playback head and track. In other words, any difference in signal levels becomes a tracking error signal depending on the relative positions of the head and track. The tape travel phase is controlled based on this error signal for controlling tracking. This system is called the ATF system.

Information is recorded and played back on adjacent tracks at different azimuth angles. Accordingly, the tape travel phase control in the above ATF system plays back the tracking pilot signals on adjacent tracks at an azimuth angle different from what it should be. (This is called reverse azimuth playback.) This degrades the detection sensitivity of the tracking error signal depending on an off-track of the head, and seriously impairs the linearity between the off-track level and error signal. As a result, phase lock-in action becomes unachievable during high-speed tape travel.

Moreover, frame synchronization is executed while obtaining information recorded on the helical tracks of the tape. When the phase lock-in action is executed while synchronizing the frame, information recorded on the track is not detectable if the head happens to scan on the track with the reverse azimuth. This results in more time being required for frame synchronization.

Since frame synchronization is needed to play back the tape and display the images, a delay results before the images can be displayed if the frame synchronization takes a long time, resulting in poor operability.

In addition, an assemble-editing cannot be started until frame synchronization with the prerecorded track is complete. A long period required from the phase lock-in action to completion of frame synchronization results in the critical problem that recording cannot be started. Furthermore, this causes more stringent conditions for reading and editing information while running the tape at high speed.

EP 776 006 discloses a magnetic recording and playback apparatus according to the preamble of claim 1.

### DISCLOSURE OF INVENTION

An object of the present invention is to offer a magnetic recording and playback apparatus that can execute operations from starting the tape travel to completing frame synchronization at high speed during high-speed tape travel as well as during normal tape travel. The present invention also solves the above-described disadvantages with the conventional system.

The magnetic recording and playback apparatus of the present invention, as defined in claim 1, includes a tape travel driver for running the tape; a reference signal generator for generating a reference frame signal to act as the reference for the tape travel phase; a CTL signal detector for detecting control signals; a time error detector; and a tape travel speed indicator. The time error detector provides one sampling period within one cycle of the control signal in one cycle of the reference frame signal, and detects the time error before a predetermined timing related to the control signal detected within the sampling period from a reference point of the reference frame signal. The tape travel speed indicator specifies the tape travel speed to the tape travel driver and the time error detector. The tape travel driver controls the tape travel phase in response to the time error.

### BRIEF DESCRIPTION OF THE DRAWINGS

Fig. 1 is a block diagram of a magnetic recording and playback apparatus in accordance with a first embodiment of the present invention.
Fig. 2 is a logic chart for detecting time error during single-speed travel in accordance with the first embodiment of the present invention.
Fig. 3 is a logic chart for detecting time error during double-speed travel in accordance with the first embodiment of the present invention.
Fig. 4 is a flow chart illustrating one example of phase lock-in action during N-speed travel in accordance with the first embodiment of the present invention.
Fig. 5 is a block diagram of a magnetic recording and playback apparatus in accordance with a second embodiment of the present invention.
Fig. 6 illustrates a system for detecting a frame phase difference in Pattern 1 in accordance with the second embodiment of the present invention.
Fig. 7 illustrates a system for detecting a frame phase difference in Pattern 2 in accordance with the second embodiment of the present invention.
Fig. 8 is a flow chart illustrating one example of phase lock-in action during N-speed travel in accordance with the second embodiment of the present invention.
Fig. 9 is a timing chart illustrating the relation between a reference frame signal and tracking pilot signal in the ATF system.

### DETAILED DESCRIPTION OF PREFERRED EMBODIMENT(S)

### FIRST EMBODIMENT

A magnetic recording and playback apparatus in a first embodiment of the present invention is described next.

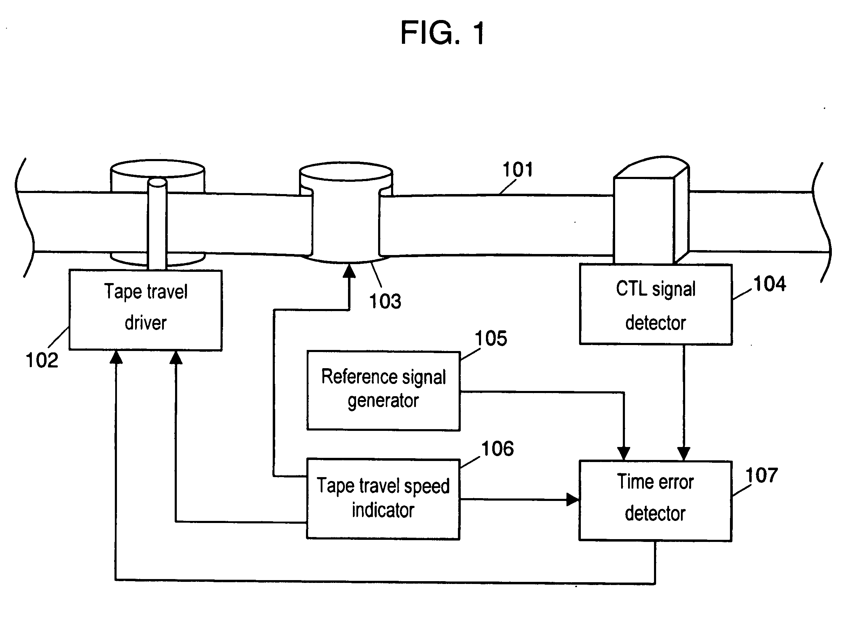

Fig. 1 is a block diagram of the magnetic recording and playback apparatus in the first embodiment.

In Fig. 1, tape travel speed indicator 106 specifies the tape travel speed of tape 101 to time error detector 107, rotation drum 103, and tape travel driver 102. Reference signal generator 105 supplies a reference frame signal as a travel reference of tape 101 to time error detector 107. CTL signal detector 104 reads a CTL signal recorded on tape 101 driven by tape travel driver 102, and supplies the CTL signal read to time error detector 107. Time error detector 107 detects any time error between the reference frame signal and the supplied CTL signal.

Tape travel speed of tape 101 that is the same as the tape travel speed for recording is called single speed, double the tape travel speed is called double speed, and N-times tape travel speed is called N speed.

When tape travel speed indicator 106 specifies single speed, time error detector 107 provides a sampling period within one cycle of the CTL signal in one cycle of the reference frame signal, and detects the time error using the rising edge of the CTL signal detected within this sampling period.

When tape travel speed indicator 106 specifies double speed, time error detector 107 provides the sampling period within one cycle of the CTL signal (within 1/2 cycle of the reference frame signal) for the double-speed travel in one cycle of the reference frame signal, and detects the time error using the rising edge of the CTL signal detected within this sampling period.

When tape travel speed indicator 106 specifies N speed, time error detector 107 provides the sampling period in one cycle of the CTL signal (within 1/N cycle of the reference frame signal) for N speed travel within one cycle of the reference frame signal, and detects the time error using the rising edge of the CTL signal detected within this sampling period.

Time error detector 107 supplies a control command required for locking tape travel phase based on the detected time error to tape travel driver 102.

Tape travel driver 102 then controls the travel speed of tape 101 in response to this command from time error detector 107.

This configuration achieves tape travel phase lock-in action when driving the tape at N speed (N is a real number which is 1 or greater). This system is called the CTL system. Rotation cylinder 103 records and plays back tracks helically on tape 101 by rotating the head.

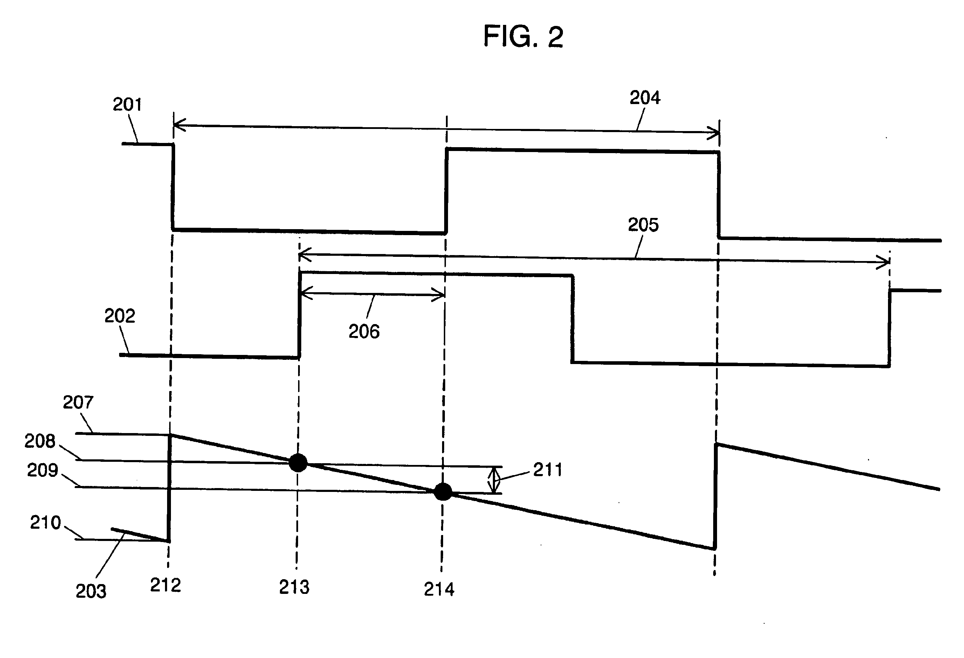

Fig. 2 shows the case of running tape 101 at a single speed using the above CTL system.

At single-speed travel, cycle 204 of reference frame signal 201 generated by reference signal generator 105 and cycle 205 of CTL signal 202 generated by CTL signal detector 104 have the same time length.

Time error detector 107 measures time error 206 of CTL signal 202 in comparison with reference frame signal 201 in the following way.

A counter for counting down using a predetermined clock (e.g., a microcomputer clock), which is reset at every falling edge 212 of reference frame signal 201 is provided. Value 207 of this counter at reset is Cs, and value 210 immediately before reset is Ce. The value of this counter is time measurement counter value 203. Time measurement counter value 203 is captured at timing 213 of rising edge of CTL signal 202, and this captured value 208 is latched. Value 208 is, for example, C1. Value 209 of time measurement counter value 203 at timing 214 of the rising edge of reference frame signal 201 is (Cs+Ce) /2. Difference 211 between value 208 and value 209, i.e., (C1 - (Cs + Ce) / 2), is detected as a time error.

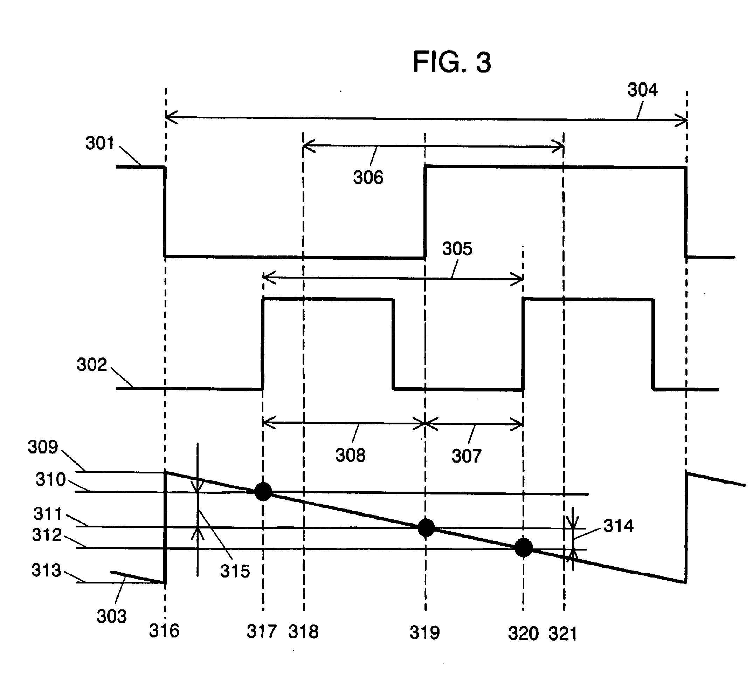

Fig. 3 shows how the time error is detected when playing back information at double speed in the CTL system.

In double-speed playback, cycle 305 of CTL signal 302 generated by CTL signal detector 104 is 1/2 of the cycle of reference frame signal 301 generated by reference signal generator 105. The rising edge of CTL signal 302 is detected twice within a period of one cycle of reference frame signal 301. In other words, time measurement counter value 303 captured at timing 317, i.e., value 310, and that captured at timing 320, i.e., value 312, exist. Value 310 is set as C1 and value 312 is set as C2. Two time errors will thus be detected: (C1 - (Cs + Ce) / 2) and (Cs+Ce)/2-C₂. These two are detected alternately, and thus they cannot be used for the phase lock-in action as they are.

The first embodiment sets sampling period 306 with a period of one cycle of CTL signal 302 (equivalent to 1/2 cycle of the reference frame signal at double-speed tape travel). Rise timing 317 of CTL signal 302 is outside of sampling period 306, and rise timing 320 of CTL signal 302 is within sampling period 306. Accordingly, only the value captured at rise timing 320 is valid, and thus (Cs+Ce)/2-C₂ is detected as time error 314. Incorrect time error 315 is ignored. Relative time error 308 of CTL signal in comparison with reference frame signal 301 is thus ignored, and relative time error 307 is used for controlling tape travel.

The above series of N-speed phase lock-in actions is made feasible by software using a processor.

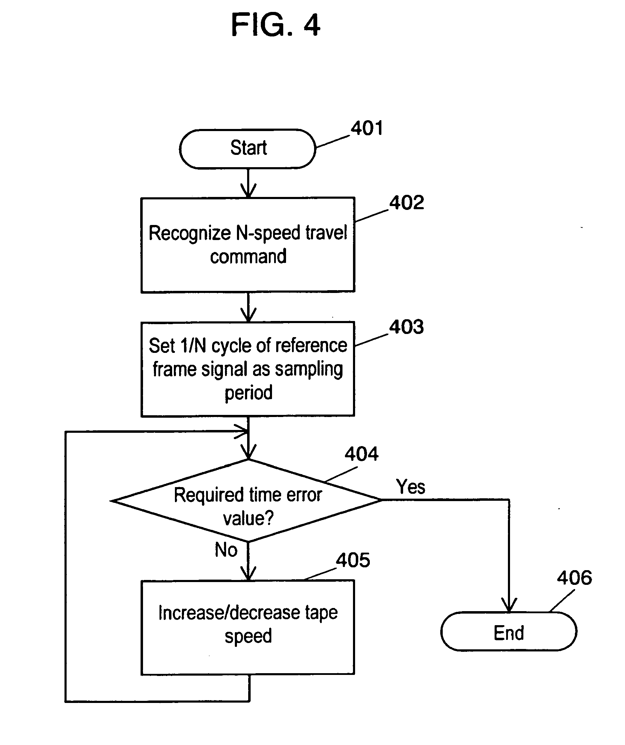

Fig. 4 shows an example of this processing.

Processing starts at Step 401, and the tape travel command is recognized to be N speed in Step 402. Then, in Step 403, the sampling period, which means the period for accepting sampling at the edge of the CTL signal, is set to 1/N cycle of the reference frame signal in one cycle of the reference frame signal. In Step 404, the time error is detected based on the edge of CTL signal present within this sampling period. If the time error detected is the required value, processing advances to Step 406 to complete the phase lock-in action. If the time error detected is not the required value, processing advances to Step 405 to increase or decrease the tape travel speed, and processing goes back to Step 404 to detect the time error again. The same steps are then repeated, with the phase lock-in action finally completing in Step 406.

The present invention includes single speed by setting N at 1.

The starting points of sampling periods 204 and 306 are not limited to the above description. A function for setting the starting points at any timing against reference frame signals 201 and 301 can be provided.

Also in the first embodiment, time error detector 107 provides the sampling period equivalent to one cycle of CTL signal in one cycle of the reference frame signal. The sampling period is provided for a maximum of one cycle of the CTL signal.

### SECOND EMBODIMENT

A magnetic recording and playback apparatus in a second embodiment of the present invention is described next.

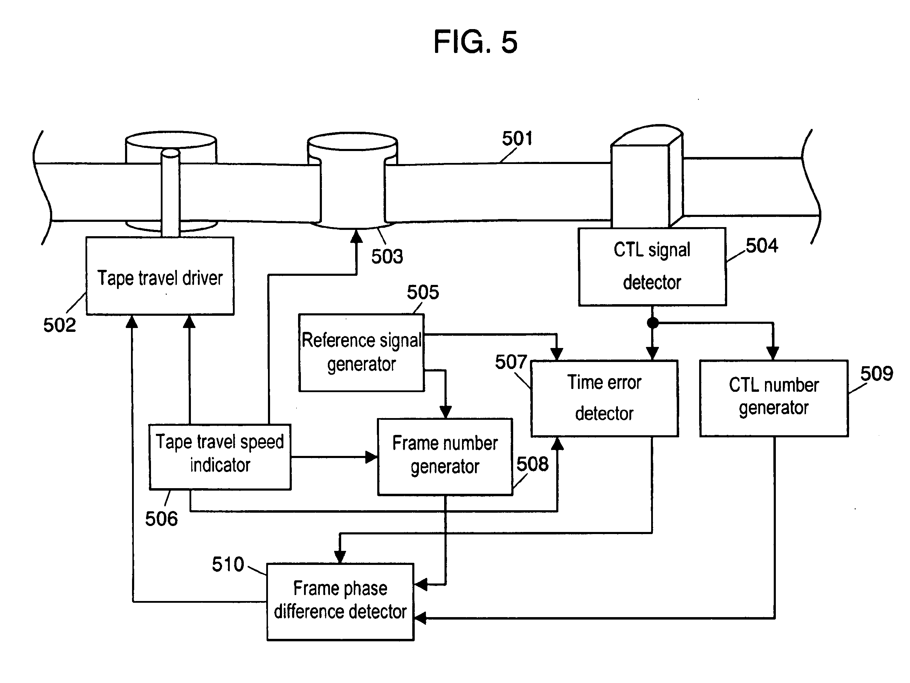

Fig. 5 is a block diagram of the magnetic recording and playback apparatus in the second embodiment.

In Fig. 5, tape travel speed indicator 506 specifies tape travel speed of tape 501 to frame number generator 508, time error detector 507, rotation drum 503, and tape travel driver 502. Here, for example, tape travel speed indicator 506 specifies N speed, i.e., N times normal recording speed.

Reference signal generator 505 supplies the reference frame signal as a reference frame to time error detector 507 and frame number generator 508. Frame number generator 508 generates the N-speed frame number based on the reference frame signal supplied from reference signal generator 505 and the tape travel speed specified by tape travel speed indicator 506, and supplies this N-speed frame number to frame phase difference detector 510. Tape travel driver 502 drives the travel of tape 501. CTL signal detector 504 reads the CTL signal recorded on tape 501, and supplies the CTL signal read to time error detector 507 and CTL number generator 509. CTL number generator 509 generates the CTL number from the CTL signal supplied, and this CTL number is supplied to frame phase difference detector 510.

Frame number generator 508 generates frame numbers which change sequentially from 0 to m (m is a whole number) by adding 1 after every one cycle of the reference frame signal supplied. In this case, m is set to 4. The frame number is represented by M. Frame number generator 508 multiplies this M by N, and divides it by (m+1) to set the remainder as a new N-speed frame number. This new N-speed frame number is output to frame phase difference detector 510. Accordingly, the value of N-speed frame number is (MxN mod (m+1)).

Time error detector 507 implements roughly the same function as time error detector 107 in Fig. 1. More specifically, time error detector 507 captures the count value of the down counter reset by the fall timing of the reference frame signal at the rise timing of the CTL signal. The difference between the captured value and reference value is then detected and supplied to frame phase difference detector 510.

Frame phase difference detector 510 executes the following processes. First, the timing for comparing the N-speed frame number and CTL number is determined based on the value captured by time error detector 507. More specifically, whether to compare at the rising edge timing of the CTL signal or at the falling edge timing is determined. In other words, Pattern 1 or Pattern 2, described later, is determined. Next, the frame phase difference, which is the number difference between the N-speed frame number and CTL number, is detected at the determined timing. Then, the time error supplied from time error detector 507 is added to the detected frame phase difference to generate the total frame phase difference. The total frame phase difference generated is then supplied to tape travel driver 502 as a control command for canceling the travel error of tape 501.

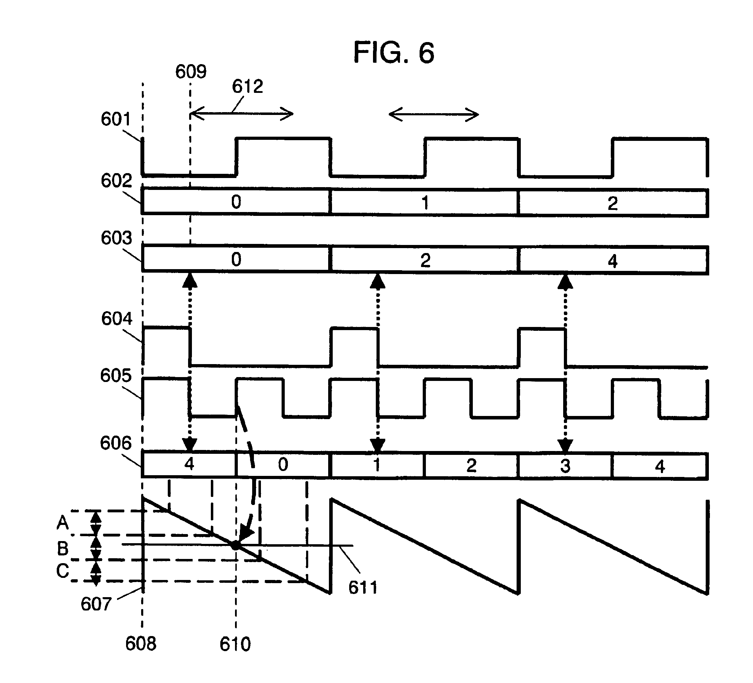

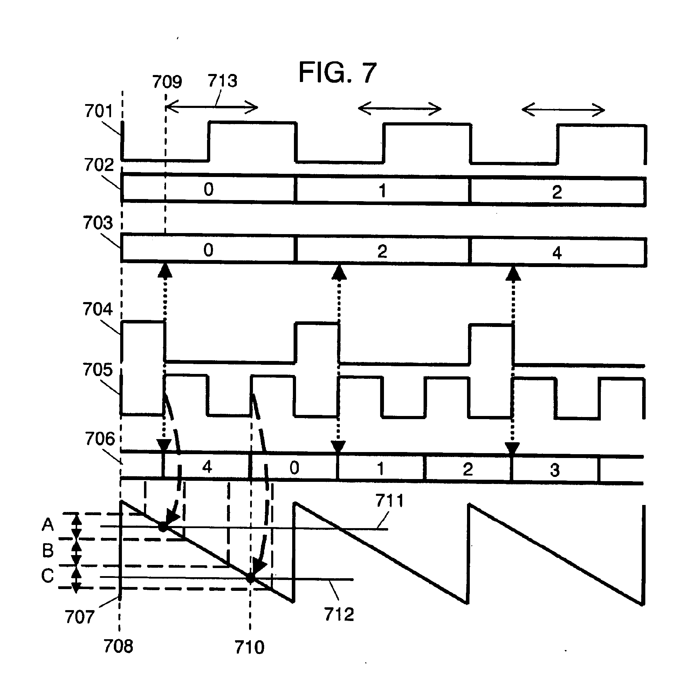

If the comparison is executed at the rising edge timing of the CTL signal, this is called Pattern 1, and if the comparison is executed at the falling edge timing, this is called Pattern 2. Figs. 6 and 7 detail Pattern 1, Pattern 2, and how each pattern is determined.

Fig. 6 illustrates the state during phase locking at double speed, i.e., N = 2, which is Pattern 1.

In Fig. 6, reference frame signal 601 and frame number 602 are output from reference signal generator 505. N-speed frame number 603 is output from frame number generator 508. CTL signal 605 is output from CTL signal detector 504. CTL number 606 is output from CTL number generator 509. While CTL number 606 is updated by 1 such as 0, 1, 2, 3, 4, 0, 1, and so on, N-speed frame number 603 is updated by every other number such as 0, 2, 4, 1, and so on, in one cycle, same as for the cycle of CTL number 606. Comparison-permitting flag 604 rises to a high level at falling edge timing 608 of reference frame signal 601, and returns to a low level immediately after the comparison between N-speed frame number 603 and CTL number 606 is complete. Comparison-permitting flag 604 is a flag which allows CTL number 606 and N-speed frame number 603 to be compared at least once within a period of N-speed frame number 603 being established. Time measurement counter value 607 is reset at every timing 608 of the falling edge of reference frame signal 601, and is a counter value down-counted by a predetermined clock such as a microcomputer clock.

Sampling period 612 is a 1/N period of reference frame signal 601 centering on the rising edge timing of reference frame signal 601. Since N is set to 2 in Fig. 6, sampling period 612 is half the period of reference frame signal 601 centering on the rising edge timing of reference frame signal 601.

Same as in Fig. 1, time error detector 507 captures time measurement counter value 607 at rise timing 610 of CTL signal 605. Since timing 610 is within sampling period 612, captured value 611 is used as the time error signal for controlling the travel of tape 501.

Accordingly, the time error is detected. If captured value 611 is C1, the detected time error value is (C1 - (Cs + Ce) /2).

Next, N-speed frame number 603 and CTL number 606 are compared as described below.

Time measurement counter value 607 is divided and defined as three regions: Region A, Region B, and Region C. Region B is the central part of time measurement counter value 607. Region A has larger values than those in region B, and Region C has smaller values than those in Region B. Value 611 captured at timing 610 is in Region B. If the captured value is in Region B, it is defined as Pattern 1. If a pattern is identified as being Pattern 1, N-speed frame number 603 and CTL number 606 are compared at falling edge timing 609 of CTL signal 605 at which comparison-permitting flag 604 is in a high level period. N-speed frame number 603 at timing 609 is 0, and CTL number 606 is 4. Accordingly, with respect to the frame phase difference, CTL number is identified as being delayed only by 1.

This frame phase difference and the above time error are added to generate the total frame phase difference. Frame phase difference detector 510 supplies the generated total frame phase difference to tape travel driver 502 to control tape travel driver 502.

Resolution of the frame phase difference (a number difference between N-speed frame number 603 and CTL number 606) is in units of one cycle of CTL number 606. An accurate time deviation level to be corrected is thus not detectable only by the frame phase difference. Therefore, frame phase difference detector 510 adds time error to the frame phase difference to output the total frame phase difference. This generation of the total frame phase difference by adding the frame phase difference and time error realizes travel control of tape 501 based on the highly accurate deviation level identified.

Next, Fig. 7 shows the case of Pattern 2. Fig. 6 shows the case where CTL number 606 delays by almost one CTL number 606 with respect to N-speed frame number 603. Fig. 7 shows the case where CTL number 706 delays by about 1.5 of CTL number 706 with respect to N-speed frame number 703.

Reference frame signal 701, frame number 702, N-speed frame number 703, comparison-permitting flag 704, CTL signal 705, CTL number 706, time measurement counter value 707, and sampling period 713 in Fig. 7 are equivalent to reference frame signal 601, frame number 602, N-speed frame number 603, comparison-permitting flag 604, CTL signal 605, CTL signal 606, time measurement counter value 607, and sampling period 612 in Fig. 6 respectively. Accordingly, detailed description of these members are omitted.

A large difference in Fig. 7 against Fig. 6 is that CTL number 706 delays by about 1.5 times of CTL number 706 against N-speed frame number 703. Accordingly, the timing to capture time measurement counter value 707 in Fig. 7 is different from that of Fig. 6. CTL signal 705 rises at timing 709 and timing 710. Value 711 and value 712 are thus captured at these timings. Timing 710 is within sampling period 713, but timing 709 is out of sampling period 713. Accordingly, only value 712 is used as time error. When captured value 712 is C2, a value of time error used is (Cs+Ce)/2-C₂. This is how the time error is detected.

N-speed frame number 703 and CTL number 706 are compared as described below.

Same as in Fig. 6, time measurement counter value 707 is defined as Region A, Region B, and Region C. Value 711 and value 712 captured at timings 709 and 710 are not in Region B but in Region A or Region C. When the captured value is in Region A or Region C, it is defined as Pattern 2.

After that the pattern is identified as being Pattern 2, N-speed frame number 703 and CTL number 706 are compared at rising edge timing 709 of CTL signal 705 at which comparison-permitting flag 704 is in a high level period. N-speed frame number 703 at timing 709 is 0 and CTL number 706 is 4. Accordingly, with respect to the frame phase difference, the CTL number is identified as being delayed by 1.

This frame phase difference and the aforementioned time error are added to generate total frame phase difference. Frame phase difference detector 510 supplies the generated total frame phase difference to tape travel driver 502 to control tape travel driver 502.

Resolution of frame phase difference (a number difference between N-speed frame number 703 and CTL number 706) is in units of one cycle of CTL number 706, and an accurate time deviation level to be corrected is thus not detectable only by the frame phase difference. Therefore, frame phase difference detector 510 adds time error to the frame phase difference to output the total frame phase difference. The generation of the total frame phase difference by adding the frame phase difference and time error realizes travel control of tape 501 based on the highly accurate deviation level identified.

The above series of N-speed frame synchronization is made feasible by software using a processor.

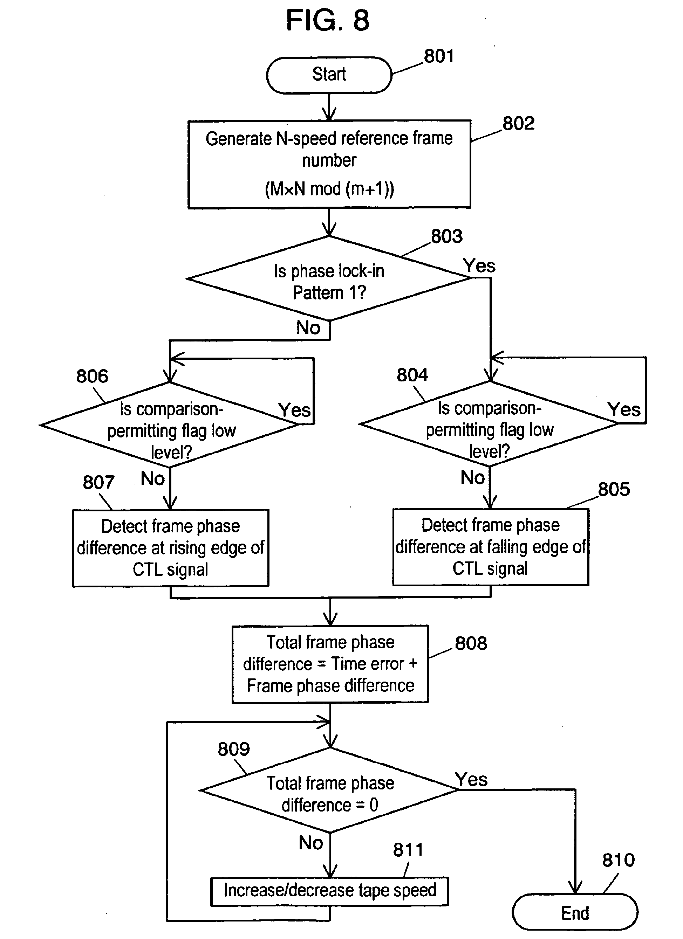

Fig. 8 shows an example of this processing. Processing starts in Step 801, and N-speed frame number is generated from frame number M in Step 802 (at N-speed travel). Then in Step 803, whether the phase lock-in state is Pattern 1 or Pattern 2 is determined based on the captured value. If the state is determined as being Pattern 1, processing advances to Step 804. In Step 804, the state of the comparison-permitting flag is confirmed. If the flag is at a low level, processing is withheld until a high level. If the comparison-permitting flag is in a high level period, the frame phase difference is detected at the falling edge of CTL signal in Step 805. Then, in Step 808, the total frame phase difference, in which the frame phase difference and time error are added, is detected.

If the state is determined to be Pattern 2 in Step 803, processing advances to Step 806. In Step 806, the comparison-permitting flag is confirmed. If the flag is at a low level, processing is withheld until it reaches a high level. If the comparison-permitting flag is in the high-level period, the frame phase difference is detected by the rising edge of the CTL signal in Step 807. In Step 808, the total frame phase difference, which is the addition of the frame phase difference and time error, is detected.

In Step 809, after Step 808, if the total frame phase difference is 0, processing advances to Step 810 to end frame synchronization. If the total frame phase difference is not 0, processing advances to Step 811 to increase or decrease the tape speed, and returns to Step 809. When the total phase difference becomes 0, processing advances to Step 10 to end frame synchronization.

The above configuration allows frame synchronization to be achieved at N speed. The present invention includes single speed by setting N at 1.

In the above description, Pattern 1 or Pattern 2 is determined by captured time measurement counter values 611, 711, and 712 to determine the timing for detecting the relative difference between N-speed frame numbers 603 and 703 and CTL numbers 606 and 706. However, the present invention is not limited to the above system. The present invention is applicable as long as the timing for detecting the relative difference between N-speed frame number and CTL number is determined based on the time relation between the frame number and CTL signal.

Moreover, the starting points of sampling periods 612 and 713 are not limited to the above description. A function for setting any timing for reference frame signals 601 and 701 can be provided.

In the second embodiment, time error detector 507 provides the sampling period equivalent to one cycle of CTL signal in one cycle of the reference frame signal. However, the sampling period is provided for a maximum of one cycle of the CTL signal.

Still more, Figs. 2, 3, 6, 7, and 8 indicate that various operations can be implemented at the rising edge or falling edge of the reference frame signal or CTL signal. However, the present invention is not limited to these edge timings. Various operations can be executed at timings at a predetermined time distance from each edge.

As described above, the phase lock-in action at N-speed travel is achieved at high speed by providing the sampling period within 1/N cycle of the reference frame signal from the start of sampling during N-speed traveling, and capturing any time error between the rising edge of the reference frame signal and the rising edge of the CTL signal once at least every one cycle of the reference frame signal.

In addition, frame synchronization at N-speed tape travel is achieved at high speed during N-speed travel by switching the timing to detect the total frame phase difference which is the sum of the frame phase difference, i.e., a number difference between the N-speed frame number obtained from the frame number and CTL number, and the time error between the rising edge or falling edge of the CTL signal, depending on the pattern detected during the phase lock-in action.

In addition, the present invention solves the disadvantages in the ATF system described as the prior art.

### INDUSTRIAL APPLICABILITY

The magnetic recording and playback apparatus of the present invention achieves tape travel phase lock-in action at high speed when the tape is traveling at N speed in a tape format in which the control signal is recorded in the longitudinal direction of the tape and information is recorded on tracks helical to the longitudinal direction of the tape. In addition, frame synchronization is achieved at high speed when the tape is traveling at N speed.

## Claims

1. A magnetic recording and playback apparatus comprising:
a tape travel driver (102, 502) for traveling a tape (101, 501), one frame of data being divided and recorded on a plurality of tracks helical to a longitudinal direction of said tape (101, 501), and a control signal for recognizing a track position being recorded in said longitudinal direction;
a reference signal generator (105, 505) for generating a reference frame signal, said signal acting as a reference for a travel phase of said tape (105, 505);
a CTL signal detector (104, 504) for detecting said control signal; and
a time error detector (107, 507),
**characterized in that,**
said magnetic recording and playback apparatus further comprises;
a tape travel speed indicator (106, 506) for specifying a travel speed of said tape (101, 501) to said tape travel driver (102, 502) and said time error detector (107, 507),
wherein said time error detector (107, 507) provides one sampling period within one cycle of said control signal in one cycle of said reference frame signal based on said specified travel speed of said tape (101, 501) by said tape travel speed indicator (106, 506), and detecting a time error within a predetermined timing related to said control signal detected in said sampling period from a reference point of said reference frame signal
wherein said tape travel driver (102, 502) controls the travel phase of said tape (101, 501) based on said time error.

2. The magnetic recording and playback apparatus as defined in Claim 1, wherein said time error detector (107, 507) provides said sampling period of 1/N cycle of said reference frame signal for a N-speed travel of said tape (101, 501), and detects said time error based on the predetermined timing related to said control signal detected in said sampling period.

3. The magnetic recording and playback apparatus as defined in one of Claims 1 and 2, wherein said apparatus has a function to set any start point of said sampling period.

4. The magnetic recording and playback apparatus as defined in one of Claims 1 and 3 further comprising:
a frame number generator (508) for generating a frame number which is counted up after every one cycle of said reference frame signal;
a CTL number generator (509) for generating a control number which is counted up after every one cycle of said control signal; and
a frame phase difference detector (510) for obtaining frame phase difference information by comparing said frame number and said control number at least once at a predetermined timing related to said control signal within a period that said frame number is determined, and outputting total frame error information based on said time error and said frame phase difference information;
wherein said tape travel driver (502) controls the travel phase of said tape (501) based on said total frame phase difference information.

5. The magnetic recording and playback apparatus as defined in Claim 4, wherein
said frame number generator (508):
multiplies frame number M (M is a whole number from 0 to m) by N when said tape travel speed indicator (506) specifies N-speed travel of said tape (501), said frame number M changing from 0 to m (m is a whole number) by adding 1 after every one cycle of said reference frame signal;
divides (MxN) by (m+1); and
outputs a remainder (MxN mod (m+1)) as a N-speed frame number; and
said frame phase difference detector (510):
obtains said frame phase difference information by comparing said N-speed frame number and said control number at least once at a predetermined timing related to said control signal within a period that one of said frame number and said N-speed frame number is determined; and
generates and outputs said total frame error information based on said time error and said frame phase difference information.

6. The magnetic recording and playback apparatus as defined in Claim 5 further comprising a pattern detector for detecting a pattern related to said reference frame signal and said CTL signal based on their timing relation, said predetermined timing related to said control signal being selected and determined, according to said pattern detected, from one of:
timing based on a rise timing of said control signal; and
timing based on a fall timing of said control signal.

## Patentansprüche

1. Magnetaufzeichnungs- und -wiedergabevorrichtung mit:
einem Bandtransportantrieb (102, 502) zum Transportieren eines Bands (101, 501), wobei ein Datenrahmen geteilt wird und auf eine Vielzahl von Spuren aufgezeichnet wird, die zu einer Längsrichtung des Bands (101, 501) spiralförmig sind, und ein Steuersignal zum Erkennen einer Spurlage in der Längsrichtung aufgezeichnet wird;
einem Referenzsignalgenerator (105, 505) zum Erzeugen eines Referenzrahmensignals, wobei das Signal als eine Referenz für eine Transportphase des Bands (105, 505) dient;
einem CTL-Signal-Detektor (104, 504) zum Erkennen des Steuersignals und
einem Zeitfehlerdetektor (107, 507),
**dadurch gekennzeichnet, dass** die Magnetaufzeichnungs- und -wiedergabevorrichtung weiterhin einen Bandtransport-Geschwindigkeitsanzeiger (106, 506) zum Festlegen einer Transportgeschwindigkeit des Bands (101, 501) für den Bandtransportantrieb (102, 502) und für den Zeitfehlerdetektor (107, 507) aufweist,
wobei
der Zeitfehlerdetektor (107, 507) eine Abtastperiode innerhalb eines Zyklus des Steuersignals in einem Zyklus des Referenzrahmensignals aufgrund der von dem Bandtransport-Geschwindigkeitsanzeiger (106, 506) festgelegten Transportgeschwindigkeit des Bands (101, 501) bereitstellt und einen Zeitfehler innerhalb eines vorgegebenen Zeitraums in Bezug auf das in der Abtastperiode erkannte Steuersignal ab einem Referenzpunkt des Referenzrahmensignals erkennt und
der Bandtransportantrieb (102, 502) die Transportphase des Bands (101, 501) aufgrund des Zeitfehlers steuert.

2. Magnetaufzeichnungs- und -wiedergabevorrichtung nach Anspruch 1, **dadurch gekennzeichnet, dass** der Zeitfehlerdetektor (107, 507) die Abtastperiode des Zyklus 1/N des Referenzrahmensignals für eine Transportgeschwindigkeit N des Bands (101, 501) bereitstellt und den Zeitfehler aufgrund des vorgegebenen Zeitraums in Bezug auf das in der Abtastperiode erkannte Steuersignal erkennt.

3. Magnetaufzeichnungs- und -wiedergabevorrichtung nach einem der Ansprüche 1 und 2, **dadurch gekennzeichnet, dass** die Vorrichtung eine Funktion zum Einstellen des Startpunkts der Abtastperiode hat.

4. Magnetaufzeichnungs- und -wiedergabevorrichtung nach einem der Ansprüche 1 und 3, die weiterhin Folgendes aufweist:
einen Rahmenanzahlgenerator (508) zum Erzeugen einer Rahmenanzahl, die nach jedem Zyklus des Referenzrahmensignals vorwärts gezählt wird;
einen CTL-Anzahl-Generator (509) zum Erzeugen einer Steuerungsanzahl, die nach jedem Zyklus des Steuersignals vorwärts gezählt wird; und
einen Rahmenphasendifferenz-Detektor (510) zum Erhalten von Rahmenphasendifferenz-Informationen durch Vergleichen der Rahmenanzahl mit der Steuerungsanzahl mindestens einmal zu einem vorgegebenen Zeitpunkt in Bezug auf das Steuersignal in einem Zeitraum, in dem die Rahmenanzahl ermittelt wird, und zum Ausgeben von Gesamtrahmenfehler-Informationen aufgrund des Zeitfehlers und der Rahmenphasendifferenz-Informationen,
wobei der Bandtransportantrieb (502) die Transportphase des Bands (101) aufgrund der Gesamt-Rahmenphasendifferenz-Informationen steuert.

5. Magnetaufzeichnungs- und -wiedergabevorrichtung nach Anspruch 4, **dadurch gekennzeichnet, dass**
der Rahmenanzahlgenerator (508) die folgenden Schritte ausführt:
Multiplizieren einer Rahmenanzahl M (M ist eine Ganzzahl von 0 bis m) mit N, wenn der Bandtransport-Geschwindigkeitsanzeiger (506) einen Transport mit einer Geschwindigkeit N für das Band (501) festlegt, wobei sich durch Addieren von 1 nach jedem Zyklus des Referenzrahmensignals die Rahmenanzahl M von 0 auf m (m ist eine Ganzzahl) ändert;
Dividieren von (M x N) durch (m + 1) und
Ausgeben eines Rests (M x N mod (m + 1)) als Rahmenanzahl für die Geschwindigkeit N, und
der Rahmenphasendifferenz-Detektor (510) die folgenden Schritte ausführt:
Erhalten der Rahmenphasendifferenz-Informationen durch Vergleichen der Rahmenanzahl für die Geschwindigkeit N mit der Steuerungsanzahl mindestens einmal in einem vorgegebenen zeitlichen Abstand in Bezug auf das Steuersignal in einem Zeitraum, in dem die Rahmenanzahl oder die Rahmenanzahl für die Geschwindigkeit N ermittelt wird; und
Erzeugen und Ausgeben von Gesamtrahmenfehler-Informationen aufgrund des Zeitfehlers und der Rahmenphasendifferenz-Informationen.

6. Magnetaufzeichnungs- und -wiedergabevorrichtung nach Anspruch 5, die weiterhin einen Musterdetektor zum Erkennen eines Musters in Bezug auf das Referenzrahmensignal und das CTL-Signal aufgrund ihrer zeitlichen Beziehung aufweist, wobei der vorgegebene Zeitraum in Bezug auf das Steuersignal entsprechend dem erkannten Muster aus einem der folgenden Zeiträume gewählt und festgelegt wird:
Zeitraum, der auf einem Zeitraum basiert, in dem das Steuersignal ansteigt, und
Zeitraum, der auf einem Zeitraum basiert, in dem das Steuersignal abfällt.

## Revendications

1. Appareil d'enregistrement et de reproduction magnétique comprenant :
un dispositif de déroulement de bande (102, 502) destiné à dérouler une bande (101, 501), une trame de données étant divisée et enregistrée sur une pluralité de pistes hélicoïdales par rapport à un sens longitudinal de ladite bande (101, 501), et un signal de commande pour reconnaître une position de piste étant enregistré dans ledit sens longitudinal ;
un générateur de signaux de référence (105, 505) destiné à produire un signal de trame de référence, ledit signal agissant comme une référence pour une phase de déroulement de ladite bande (101, 501) ;
un détecteur de signaux CTL (104, 504) destiné à détecter ledit signal de commande ; et
un détecteur d'erreurs temporelles (107, 507),
**caractérisé en ce que,**
ledit appareil d'enregistrement et de reproduction magnétique comprend, en outre :
un indicateur de vitesse de déroulement de bande (106, 506) destiné à spécifier une vitesse de déroulement de ladite bande (101, 501) audit dispositif de déroulement de bande (102, 502) et audit détecteur d'erreurs temporelles (107, 507) ;
dans lequel ledit détecteur d'erreurs temporelles (107, 507) prévoit une période d'échantillonnage à l'intérieur d'un cycle dudit signal de commande en un cycle dudit signal de trame de référence, sur la base de ladite vitesse de déroulement de ladite bande (101, 501) spécifiée par ledit indicateur de vitesse de déroulement de bande (106, 506), et la détection d'une erreur temporelle à l'intérieur d'un positionnement temporel prédéterminé se rapportant audit signal de commande détecté dans ladite période d'échantillonnage à partir d'un point de référence dudit signal de trame de référence,
dans lequel ledit dispositif de déroulement de bande (102, 502) commande la phase de déroulement de ladite bande (101, 501) sur la base de ladite erreur temporelle.

2. Appareil d'enregistrement et de reproduction magnétique selon la revendication 1, dans lequel ledit détecteur d'erreurs temporelles (107, 507) fournit ladite période d'échantillonnage de 1/N cycle dudit signal de trame de référence pour un déroulement à la vitesse N de ladite bande (101, 501), et détecte ladite erreur temporelle sur la base du positionnement temporel prédéterminé se rapportant audit signal de commande détecté dans ladite période d'échantillonnage.

3. Appareil d'enregistrement et de reproduction magnétique selon l'une des revendications 1 et 2, dans lequel ledit appareil possède une fonction pour régler un point de départ quelconque de ladite période d'échantillonnage.

4. Appareil d'enregistrement et de reproduction magnétique selon l'une des revendications 1 et 3, comprenant, en outre :
un générateur de numéro de trame (508) destiné à engendrer un numéro de trame qui est compté dans le sens croissant après chacun des cycles dudit signal de trame de référence ;
un générateur de numéro de CTL (509) destiné à engendrer un numéro de commande qui est compté dans le sens croissant après chacun des cycles dudit signal de commande ; et
un détecteur de différence de phase de trame (510) destiné à obtenir une information de différence de phase de trame en comparant ledit numéro de trame et ledit numéro de commande au moins une fois à un positionnement temporel prédéterminé se rapportant audit signal de commande à l'intérieur d'une période à laquelle ledit numéro de trame est déterminé, et en délivrant en sortie une information d'erreur de trame totale sur la base de ladite erreur temporelle et de ladite information de différence de phase de trame ;
dans lequel ledit dispositif de déroulement de bande (502) commande la phase de déroulement de ladite bande (501) sur la base de ladite information de différence de phase de trame totale.

5. Appareil d'enregistrement et de reproduction magnétique selon la revendication 4, dans lequel
ledit générateur de numéro de trame (508) :
multiplie le numéro de trame M (M est un nombre entier allant de 0 à m) par N lorsque ledit indicateur de vitesse de déroulement de bande (506) spécifie un déroulement à la vitesse N de ladite bande (501), ledit numéro de trame M passant de 0 à m (m est un nombre entier) par ajout de 1 après chacun des cycles dudit signal de trame de référence ;
divise (M x N) par (m + 1) ; et
délivre en sortie un reste (M x N mod (m + 1)) en tant que numéro de trame à la vitesse N ; et
ledit détecteur de différence de phase de trame (510) :
obtient ladite information de différence de phase de trame en comparant ledit numéro de trame à la vitesse N et ledit numéro de commande au moins une fois à un positionnement temporel prédéterminé se rapportant audit signal de commande à l'intérieur d'une période à laquelle l'un parmi ledit numéro de trame et ledit numéro de trame à la vitesse N est déterminé ; et
engendre et délivre en sortie ladite information d'erreur de trame totale sur la base de ladite erreur temporelle et de ladite information de différence de phase de trame.

6. Appareil d'enregistrement et de reproduction magnétique selon la revendication 5, comprenant en outre un détecteur de motif destiné à détecter un motif se rapportant audit signal de trame de référence et audit signal CTL sur la base de leur relation de positionnement temporel, ledit positionnement temporel prédéterminé se rapportant audit signal de command étant sélectionné et déterminé, en fonction dudit motif détecté, à partir de l'un parmi :
un positionnement temporel sur la base d'un positionnement temporel de montée dudit signal de commande ; et
un positionnement temporel sur la base d'un positionnement temporel de descente dudit signal de commande.
